# EUROPEAN PATENT APPLICATION

(11) **EP 1 480 090 A1**
(43) Date of publication of application: **24.11.2004**
(21) Application number: 03778852.8
(22) Date of filing: 12.12.2003
(51) Int. Cl.: G04B 47/00, G04C 3/00, G04C 9/00, H04M 1/00

(54) **PORTABLE INFORMATION DEVICE**

(30) Priority: 17.12.2002 JP 2002365532; 17.12.2002 JP 2002365533
(71) Applicant: SEIKO EPSON CORPORATION, Shinjuku-ku, Tokyo 163-0811 (JP)
(72) Inventor: MARUYAMA, Akihiko, c/o SEIKO EPSON CORPORATION, Suwa-shi, Nagano 392-8502 (JP); OKUHARA, Kenichi, c/o SEIKO EPSON CORPORATION, Suwa-shi, Nagano 392-8502 (JP)
(74) Representative: Sturt, Clifford Mark
(86) International application number: PCT/JP2003/015915
(87) International publication number: WO 2004/055604

(57) **Abstract**

In order to provide an elegantly styled portable information device in which the visibility of the time can be sufficiently ensured even when the casing of the portable information device is closed, a portable phone 100 includes a configuration wherein an analog quartz clock 50 is provided to an outer surface on a display side 1a of the casing 1 of the portable phone, which is the surface 1c forming the outer side when the casing 1 is closed. Moreover, the time of the analog quartz clock 50 is synchronized with the time displayed by the display section of the portable phone 100.

## Description

### FIELD OF THE INVENTION

The present invention relates to a portable information device such as a portable phone or a PDA (Personal Digital Assistant).

### BACKGROUND INFORMATION

In the currently popular portable phones with a flip configuration, the screen display section and the operating section are joined by a hinge structure, and the phone can be opened and closed by this hinge structure. For example, as shown in Japanese Laid-Open Patent Publication 2002-9914, a portable phone with a flip configuration consists of an image display section made of a liquid crystal display panel or organic EL (Electro Luminescence) panel, and a plurality of buttons or jog dials or other such operational parts positioned on the surface to form a dialing area when the casing is opened. Recently, many relatively expensive portable phones are also being provided with another smaller image display section on the surface opposite to the image display section so that information can be displayed even when the casing is closed. This small image display section primarily displays the remaining power level, the incoming signal strength, incoming displays, a digital clock, and the like in digital format.

The recent widespread use of portable phones brings an increase in users who do not wear wristwatches. Users wanting to know the time can confirm the time by looking at the clock displayed on the small screen display section or the main screen display section of the portable phone. Also, it has become a common scene that young ladies place their portable phones on the table in place of the clock in popular cafes and the like.

However, portable phones with the above-mentioned conventional flip configuration still display the time in a liquid crystal display panel or an organic EL panel, which is a problem in that it lacks class or style. Also, the small image display section provided on the outer side of the casing uses a liquid crystal panel or an organic EL panel, and the time is displayed in digital format, which has been a problem in that sufficient visibility is not ensured.

The present invention was perfected in view of the situation described above, and one object of the present invention is to provide a portable information device that provides adequate visibility of the time even when the casing is closed, and that has an elegant appearance.

### DISCLOSURE OF THE INVENTION

A first aspect of the present invention is a portable information device comprising a casing having opened and closed positions, and an internal display section that appears when said casing is opened, said internal display section being configured to display time, said portable information device characterized by an index type analog clock provided in a portion of said casing which is an external portion when said casing is closed, and said analog clock displays time that is synchronized with the time displayed in said internal display section.

A second aspect of the present invention is a portable information device comprising a casing having opened and closed positions, and an internal display section that appears when said casing is opened, said internal display section being configured to display time, said portable information device characterized by an index type analog clock provided in a portion of said casing which is an external portion when said casing is closed, and the index of said analog clock is driven according to an output signal from a circuit that times the time displayed in said internal display section.

Also, a third aspect of the present invention is the portable information device as in the first or second aspect, characterized by a baseboard of said analog clock is electrically connected to a baseboard of said portable information device.

Also, a fourth aspect of the present invention is the portable information device as in the first or second aspect, characterized by an adjusting means provided to adjust each of the time displayed in said internal display section and the time displayed by said analog clock independently or in an interdependent manner.

Also, a fifth aspect of the present invention is the portable information device as in the fourth aspect, characterized by said adjusting means adjusts the time displayed by said analog clock when the time displayed in said internal display section is adjusted.

Also, a sixth aspect of the present invention is the portable information device as in the fourth aspect, characterized by an operation section provided so that a user can operate said portable information device, and said adjusting means adjusts the time displayed in said internal display section in response to operation of the operation section.

Also, a seventh aspect of the present invention is the portable information device as in the fourth aspect, characterized by said adjusting means drives said index of said analog clock such that said index of said analog clock is moved to an initial position before said index of said analog clock is moved to display an adjusted time.

Also, an eighth aspect of the present invention is the portable information device as in the seventh aspect, characterized by a means to correct a displacement between said index and said initial position provided to correct said displacement when said index is displaced from said initial position after said index is driven by said adjusting means.

Also, a ninth aspect of the present invention is the portable information device as in the fourth aspect, characterized by a driving means provided to drive the index of said analog clock according to an output signal from a circuit that times the time displayed in said internal display section, and said adjusting means includes a detecting means to detect a current position of said index and a drive control means to control said driving means to drive said index from said initial position based on a detection result of said detecting means such that the index displays adjusted time.

Also, a tenth aspect of the present invention is the portable information device as in the ninth aspect, characterized by said driving means is provided for each of pointers of said index.

Also, an eleventh aspect of the present invention is the portable information device as in the ninth aspect, characterized by said index includes at least a minute pointer, and said minute pointer has a driving means that is independent of the driving means that drives the other pointers of said index.

### BRIEF DESCRIPTION OF THE DRAWINGS

FIG. 1 is a perspective view showing the external structure of the portable phone in accordance with one embodiment of the present invention.
FIG. 2 is a schematic cross-sectional structural view of the portable phone.
FIG. 3 is a block diagram showing the functional structure of the portable phone.
FIG. 4 is a top plan view showing the movement in an analog quartz clock of the portable phone.
FIG. 5 is a cross-sectional view showing the configuration of the movement in the analog quartz clock of the portable phone.
FIG. 6 is a top view for illustrating the mounting of the analog quartz clock on the portable phone.
FIG. 7 is a cross-sectional view for illustrating the mounting of the analog quartz clock on the portable phone.

### DETAILED DESCRIPTION OF THE PREFERRED EMBODIMENTS

Embodiments of the present invention will now be explained with reference to the drawings. In this embodiment, a portable phone is given as an example of a portable information device.

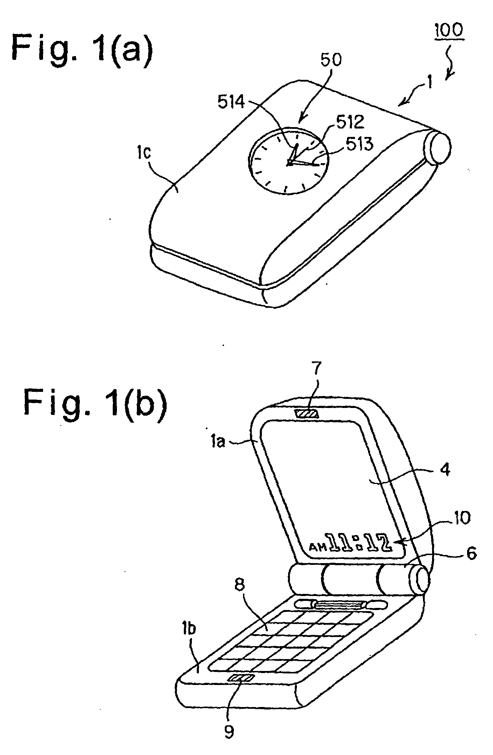

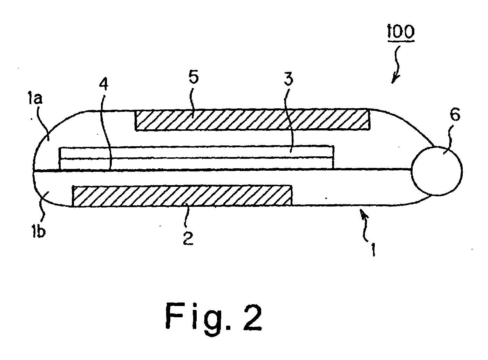

FIGS. 1 is perspective views showing the portable phone 100 in accordance with one embodiment of the present invention. FIG. 2 is a cross-sectional structural view of the portable phone 100 shown in FIG. 1. Inside a casing 1, the portable phone 100 comprises a power source 2, which is a secondary battery, a circuit board 3 for controlling the portable phone 100 and performing other functions, a liquid crystal display panel or organic EL panel or another such display 4 (internal display section) for displaying information, and a movement 5 of an analog quartz clock 50. The casing 1 forms a flip structure completely divided in two by a hinge 6. As shown in FIG. 1(b), a display side 1a of the casing 1 is provided with the display 4 and a speaker 7, and an operating side 1b of the casing 1 is provided with operating keys (operating panel) 8 and a microphone 9. The circuit board 3 is primarily contained in the display side 1a of the divided casing 1, and the power source 2 is contained in the operating side 1b.

Also, an outer surface of the display side 1a of the casing 1, that is, a surface 1c constituting the outer side when the casing 1 is closed as shown in FIG. 1(a), is provided with an analog quartz clock 50. The power source of the analog quartz clock 50 is the same as the power source 2 of the portable phone 100. As shown in FIG. 1(a), the analog quartz clock 50 comprises three hands, specifically, a second hand 512, a minute hand 513, and an hour hand 514. Of course, a two-handed clock comprising only a minute hand 513 and an hour hand 514 may also be used as the analog quartz clock 50.

Thus, the structure of the portable phone 100 in which the analog quartz clock 50 is disposed on the outer surface (surface 1c) of the display side 1a of the casing 1 allows the user to keep the time in view without opening the portable phone 100. Also, since the analog quartz clock 50 utilizes the index section with a plurality of hands, the visibility is improved over a digital clock and allows the cold feel of a digital display to be overcome to provide an elegant design, which can be expected to be particularly popular with female users.

As described above, the portable phone 100 is provided with two clocks, a clock 10 displayed in the display 4 and the analog quartz clock 50. Also, the present embodiment is configured to make the time of the analog quartz clock 50 synchronous with the time of the clock 10. Also, when the user corrects the time of both clocks 10 and 50, it is troublesome for the user to set each time separately. When the user sets each time separately, there is a high possibility that the two times will deviate from each other, which inconveniences the user. In view of this, the present embodiment is configured such that the time of the analog quartz clock 50 is adjusted in an interdependent manner with adjusting the clock 10 by using the operating keys 8 in the portable phone 100. This configuration will be described in further detail below.

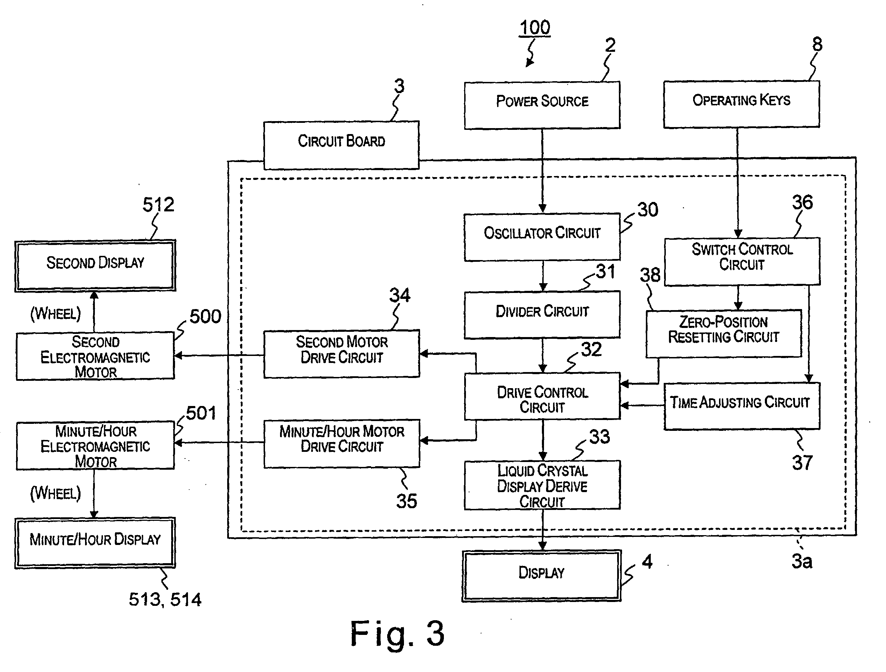

FIG. 3 is a block diagram showing the functional structure of the portable phone 100. In this diagram, the power source 2, the circuit board 3, the display 4, and the operating keys 8 constitute a common conventional portable phone 100. The movement of the analog quartz clock 50 is configured to receive a supply of electric power from the power source 2 of the portable phone 100. Since the power consumed by the analog quartz clock 50 is usually much less than the power consumed by a regular portable phone, adapting the movement to receive power from the power source 2 does not have a negative effect on the power consumption of the portable phone 100. Of course, a regular button cell battery or solar battery may be used in place of the power source of the portable phone 100 as the power source of the analog quartz clock 50.

As described above, a configuration is provided wherein the clock 10 for displaying time in digital or analog format is displayed in the display 4, and circuits for controlling the timing of the clock 10 are integrated in an integrated circuit 3 a on the circuit board 3 in the portable phone 100. Specifically, the integrated circuit 3a comprises a crystal oscillator (quartz), and also comprises an oscillator circuit 30 for outputting a clock signal with a specific frequency (for example, 32.768 kHz) to a divider circuit 31. The divider circuit 31 divides the clock signal from the oscillator circuit 30, generates a 1-Hz clock signal, and outputs it to a drive control circuit 32. The drive control circuit 32 comprises a counter circuit for keeping the time based on the clock signal from the divider circuit 31, outputs the time information to a liquid crystal display drive circuit 33, outputs a clock signal indicating the movement timing of the second hand 512 to a second motor drive circuit 34, and outputs a clock signal indicating the movement timing of the minute hand 513 to a minute/hour motor drive circuit 35.

The liquid crystal display drive circuit 33 drives the liquid crystal panel in the display 4, displays various information, and displays the clock 10 that shows the current time based on the time information from the drive control circuit 32. Thus, the clock 10 is displayed on the display 4 as shown in FIG. 1(b).

The second motor drive circuit 34 drives a second electromagnetic motor 500 in the movement 5 of the analog quartz clock 50, and drives a gear coupled with the second electromagnetic motor 500 in order to drive the second hand 512 of the analog quartz clock 50 based on the clock signal from the drive control circuit 32. The minute/hour motor drive circuit 35 drives a minute/hour electromagnetic motor 501 and a gear coupled with this minute/hour electromagnetic motor 501 in order to drive the minute hand 513 based on the clock signal from the drive control circuit 32. Specifically, in the present embodiment, the movement 5 of the analog quartz clock 50 is driven by common circuits for the clock 10 in the portable phone 100, and it is possible to provide matching time displays that are synchronous between the analog quartz clock 50 and the clock 10 on the display 4 because of the adopted configuration for moving the second hand 512, minute hand 513, and hour hand 514 of the analog quartz clock 50. More specifically, the analog quartz clock 50 shares the timing circuits with the circuits commonly provided to the portable phone 100. Furthermore, even though the portable phone 100 has the analog quartz clock 50, cost can be reduced because a single circuit can be used for timing. The configuration of the movement 5 of the analog quartz clock 50 will be described in detail hereinbelow.

Also, in the present embodiment, the configuration is such that when the user adjusts the time of the clock 10 displayed on the display 4 of the portable phone 100 in the conventional manner, the time of the analog quartz clock 50 is also adjusted accordingly. More specifically, the integrated circuit 3a of the portable phone 100 is provided with a switch control circuit 36 for detecting the operation of the operating keys 8 and outputting instructions to each circuit in accordance with the operating condition. When the user operates to adjust the time, the switch control circuit 36 detects the operation and presents a time adjusting circuit 37 with a time adjusting signal indicating the time adjusted by the user. When the time adjusting circuit 37 receives the time adjusting signal, an instruction indicating that the counter value is adjusted to a different time adjusted by the user is outputted to the drive control circuit 32, whereby the counter value of the drive control circuit 32 is adjusted. The drive control circuit 32 controls the liquid crystal display drive circuit 33 in order to display the adjusted time on the clock 10 of the display 4, whereby the adjusted time is displayed on the clock 10.

Also, the drive control circuit 32 controls both the second motor drive circuit 34 and the minute/hour motor drive circuit 35 in order to match the time display of the analog quartz clock 50 with the adjusted time. However, as described above, the drive control circuit 32 merely provides the movement timing of the second hand 512, minute hand 513, and hour hand 514 to the second motor drive circuit 34 and the minute/hour motor drive circuit 35 alone. Thus, it is not recognized which positions the hands 512, 513, and 514 are currently indicating. In view of this, the present embodiment is configured such that when the time display of the analog quartz clock 50 is adjusted, the second hand 512, minute hand 513, and hour hand 514 are all moved to the time adjusted by the user after once moved to their initial positions (for example, 0 hr 0 min 0 sec).

Specifically, the switch control circuit 36 outputs a signal indicating that the time has been adjusted to a zero-position resetting circuit 38 upon detecting that the user has adjusted a time. Upon receiving the signal from the switch control circuit 36, the zero-position resetting circuit 38 outputs a resetting signal to the drive control circuit 32 to return the second hand 512, the minute hand 513, and the hour hand 514 to their initial positions. When the resetting signal is inputted, the drive control circuit 32 outputs a clock signal to both the second motor drive circuit 34 and the minute/hour motor drive circuit 35, and moves the second hand 512, the minute hand 513, and the hour hand 514 to their initial positions. Specifically, the drive control circuit 32 outputs a plurality of clock signals to the second motor drive circuit 34, which are necessary to move the second hand to its initial position based on the current position of the second hand 512, and also outputs a plurality of the clock signals to the minute/hour motor drive circuit 35, which are necessary to move each of the minute hand 513 and the hour hand 514 to its initial position based on the current positions of the minute hand 513 and hour hand 514. Thus, at the beginning of time adjusting, the second hand 512, the minute hand 513, and the hour hand 514 once move to their initial starting positions. Then, the drive control circuit 32 outputs a clock signal to both the second motor drive circuit 34 and the minute/hour motor drive circuit 35 based on the instruction from the time adjusting circuit 37 for the purpose of displaying the adjusted time on the analog quartz clock 50. The timing whereby the time of the clock 10 displayed on the display 4 is adjusted and the timing whereby the time of the analog quartz clock 50 is adjusted may be one ahead of the other or simultaneous as long as the timing whereby both clocks begin counting the time after the adjusting operation is simultaneous. Thus, the configuration is such that the time display of the analog quartz clock 50 is automatically adjusted in an interdependent manner with the time adjusting of the clock 10 on the display 4. Therefore, the user can adjust the time of the analog quartz clock 50 with ease by merely adjusting the time of the portable phone 100 in a conventional manner.

Sometimes the hands 512, 513, and 514 do not return to the initial positions described above when the circuits are reset or the like, and the initial positions become misaligned. In view of this, the present embodiment is configured such that when the initial positions of the hands 512, 513, and 514 are misaligned, the user operates the operating keys 8 to return the hands 512, 513, and 514 to their initial positions. More specifically, the user inputs a displacement amount by which the hands 512, 513, and 514 are misaligned from the initial positions using the operating keys 8 (for example sending the minute hand 513 forward by five minutes). This input is outputted to the drive control circuit 32 via the switch control circuit 36 and time adjusting circuit 37. Then the drive control circuit 32 outputs a clock signal to the second motor drive circuit 34 and the minute/hour motor drive circuit 35 to drive the hands 512, 513, and 514 by the displacement amount inputted by the user. When the misalignment of the initial position is adjusted, the time of the clock 10 displayed on the display 4 does not have to be adjusted. Therefore, when the misalignment of the initial position is adjusted, the drive control circuit 32 does not output any signals to the liquid crystal display drive circuit 33, and only the hands 512, 513, and 514 of the analog quartz clock 50 are driven. It is also possible to adapt an arrangement in which the user inputs the misaligned positions of the hands 512, 513, and 514 when these are misaligned from the initial positions, and the misaligned positions are set as the new initial positions. In other words, since the positions occupied by the hands 512, 513, and 514 at the present time (at the time of adjusting) are recognized in such case, the time displayed by the analog quartz clock 50 can be adjusted.

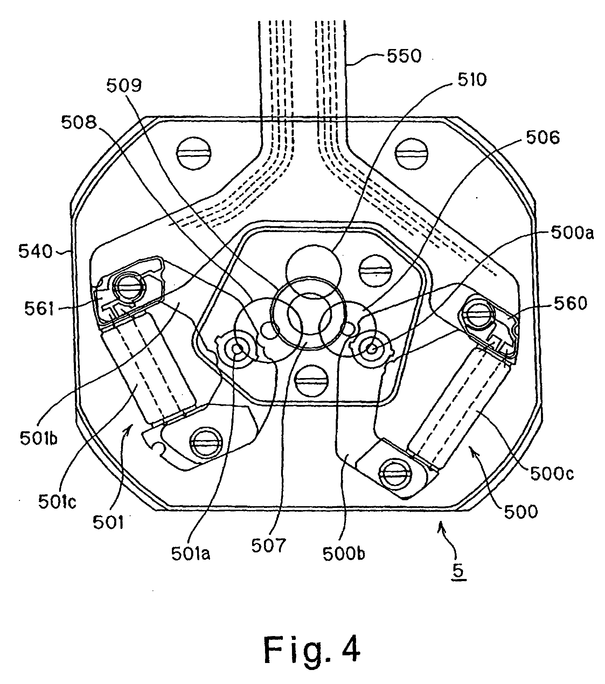

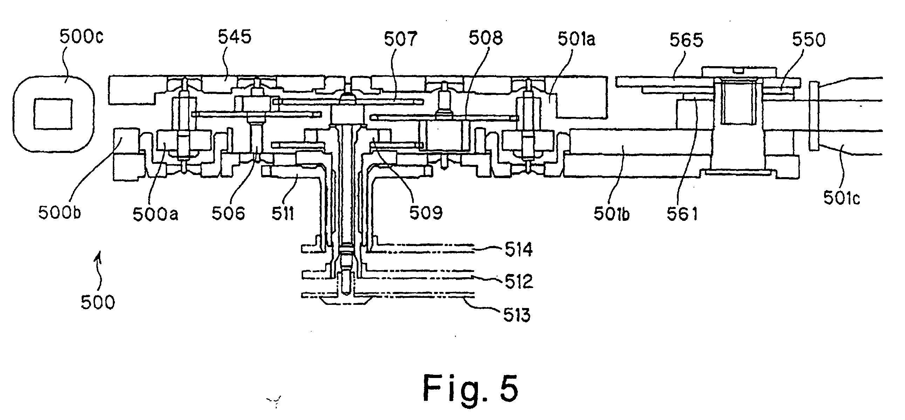

Next, the mounting of the movement 5 on the portable phone 100 will be described along with the configuration of the movement 5 in the analog quartz clock 50. FIG. 4 is a top plan view showing the mechanical configuration of the movement 5, and FIG. 5 is a cross-sectional view of the movement 5. As shown in FIGS. 4 and 5, the movement 5 comprises a drive mechanism for moving and driving the second hand 512, and a drive mechanism for moving and driving the minute hand 513 and hour hand 514 that is independent of the drive mechanism for the second hand 512. More specifically, as the drive mechanism for driving the second hand 512, the movement 5 comprises a second electromagnetic motor 500 including a second rotor 500a composed of a permanent magnet, a second stator 500b composed of a highly magnetically permeable material provided around the second rotor 500a, and a second coil block 500c for generating a magnetic field on the second stator 500b in accordance with a clock signal from the second motor drive circuit 34. Also, the drive mechanism for driving the second hand 512 comprises a fifth wheel 506 that moves in coordination with the rotation of the second rotor 500a, and a fourth wheel 507 for driving the second hand 512 in coordination with the fifth wheel 506. Specifically, when the clock signal (pulse voltage) from the second motor drive circuit 34 is inputted to the second coil block 500c, a magnetic field is generated in the second stator 500b by electromagnetic induction, and the second rotor 500a rotates due to this magnetic field. This revolution is transmitted to the fourth wheel 507 via the fifth wheel 506, whereby the second hand 512 is driven.

The movement 5 comprises, as the drive mechanism for driving the minute hand 513 and hour hand 514, a minute/hour electromagnetic motor 501 including a minute/hour rotor 501a, a minute/hour stator 501 b, and a minute/hour coil block 501c. The drive mechanism for driving the minute hand 513 and hour hand 514 also includes a middle wheel 508 that moves in coordination with the rotation of the minute/hour rotor 501a, and a second wheel 509 for driving the minute hand 513 in coordination with the middle wheel 508. Furthermore, the movement 5 comprises a day back wheel 510 in meshed engagement with the second wheel 509, and a scoop wheel 511 for driving the hour hand 514 in coordination with the day back wheel 510. Specifically, when the clock signal from the minute/hour motor drive circuit 35 is input to the minute/hour coil block 501c, the minute/hour rotor 501a rotates similar to the second electromagnetic motor 500. This rotation is transmitted to the second wheel 509 via the middle wheel 508, and the minute hand 513 is driven. Also, the rotation of the second wheel 509 is transmitted to the scoop wheel 511 via the day back wheel 510, and the hour hand 514 is driven.

Thus, the present embodiment offers a configuration in which the second hand 512, the minute hand 513, and the hour hand 514 are each driven by separate drive mechanisms, which is because of the following reasons. Specifically, in the present embodiment, the time adjusting mechanisms and circuits are used together with the circuits of the portable phone 100 to adjust the time of the analog quartz clock 50. Thus, an arrangement is provided in which the time is adjusted by inputting electrical signals to an electromagnetic motor instead of an arrangement in which the winder is not rotated to adjust the time by a mechanical structure in the manner performed in conventional analog watches. In the conventional configuration, an equivalent of 60 × 60 = 3600 seconds is needed for a one-hour adjustment when the hands 512, 513, and 514 are driven by the gear-driven interlocking movement from a single driving mechanism. About 28 (approximately 3600/128) seconds are needed even with a fast-speed drive of 128 Hz, and an extreme amount of time and labor is needed for time adjustment.

In view of this, in the present embodiment, the second hand 512 for counting off seconds, which is the smallest unit of time, and the minute hand 513 and hour hand 514 are driven by separate drive mechanisms. Thus, the amount of time required for time adjustment is reduced. Similarly, it is possible to adapt a configuration in which the minute hand 513 and the hour hand 514 are driven by separate drive mechanisms, allowing for a further reduction in the amount of time required for time adjustment.

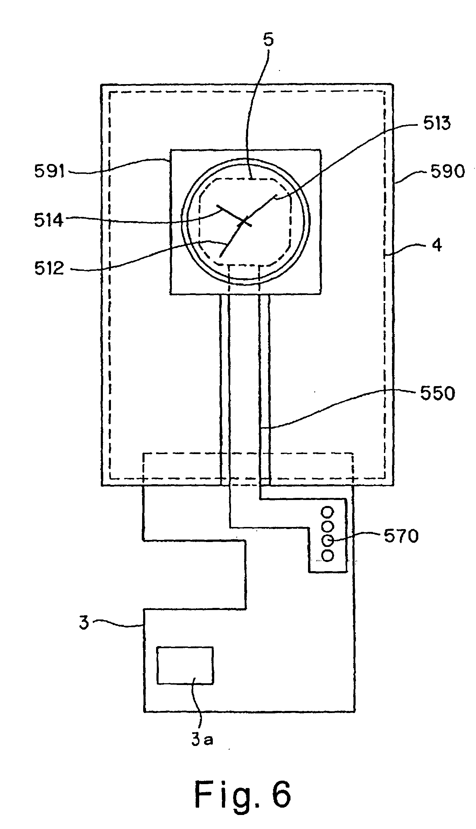

The wheels in the drive mechanisms described above are supported by a wheel bearing 545 as shown in FIG. 5, which forms a configuration wherein backlash or the like is prevented. Furthermore, as shown in FIG. 4, the second coil block 500c in the above-mentioned second electromagnetic motor 500 is electrically connected to a second coil lead board 560 in which a lead wire is brought out from a flexible board 550, and the minute/hour coil block 501c in the minute/hour electromagnetic motor 501 is electrically connected to a minute/hour coil lead board 561 in which a lead wire is brought out from the flexible board 550. Furthermore, the flexible board 550 is electrically connected to the circuit board 3 in the portable phone 100 via a soldered part 570, as shown in FIG. 6. Specifically, the second coil block 500c and the minute/hour coil block 501c are conductive in relation to the circuit board 3, and the clock signals from the second motor drive circuit 34 and the minute/hour motor drive circuit 35 in the integrated circuit 3a on the circuit board 3 are inputted to the corresponding coil blocks 500c and 501c, respectively. Also, the flexible board 550 and the coil lead board 560 are both pressed in the direction of a dial pad 580 by a circuit pressing plate 565.

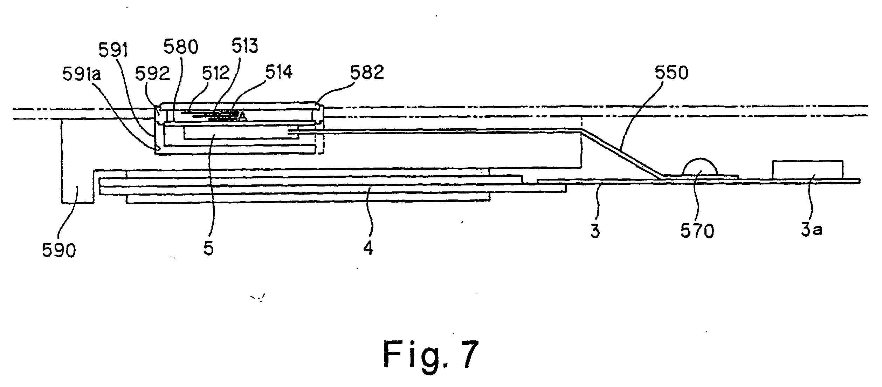

As described above, the analog quartz clock 50 is mounted on the reverse side of the display 4 with the liquid crystal panel. In other words, the analog quartz clock 50 is mounted on the surface 1c constituting the outer side of the casing 1 when the casing 1 is closed. More specifically, as shown in FIG. 6, the analog quartz clock 50 is fixedly fitted in a quadrangular frame 591 together with the movement 5. More specifically, as shown in FIG. 7, the analog quartz clock 50 comprises the movement 5, the dial pad 580, and the hands 514, 513, and 512 layered in the order indicated and encased in the frame 591. Also, a rim 592 is provided to the periphery of the dial pad 580, and a cover glass 582 covering the dial pad 580 is provided to the top of the rim 592. A receiving member 590 comprising plastic material is provided to the top side of the display 4 in FIG. 7. A concavity 591a that is interlocked with the frame 591 is formed on the top surface of the receiving member 590. The frame 591 is set in the concavity 591a, whereby the analog quartz clock 50 is fixedly mounted. Thus, since the frame 591 and the concavity 591a have a polygonal shape, aligning when the analog quartz clock 50 is set in place is made easier, and the analog quartz clock 50 is prevented from rotating.

According to the present embodiment, the portable phone 100 is configured such that the analog quartz clock 50 is mounted on the outer surface (surface 1c) of the display side 1a of the casing 1. Thus, the user can view the time without opening the portable phone 100, as described above. Also, visibility is improved in comparison with a digital clock because of the index section with the hands 512, 513 and 514, and the cold feel of a digital display can be overcome to provide an elegant design.

Also, since a configuration in which the circuits for timing the analog quartz clock 50 are used together with the circuits in the portable phone 100 is adapted, the analog quartz clock 50 and the clock 10 displayed in the display 4 of the portable phone 100 can be prevented from showing different times. Furthermore, since a configuration in which the time of the analog quartz clock 50 is adjusted in coordination with the conventional operations performed by the user to adjust the time of the portable phone 100 is adapted, the user can simultaneously adjust the times of both the analog quartz clock 50 and the clock 10 with a simple operation.

Since the second hand 512 for counting off seconds, the smallest unit of time, and the minute hand 513 and hour hand 514 are driven by separate drive mechanisms, the amount of time required for adjusting the time can be reduced.

### <Examples of Alternate Embodiment>

The embodiment described above is merely a non-limiting aspect of the present invention, and optional variations are possible within the range of the present invention. For example, alternative embodiments of the present invention will be described below.
(1) In the embodiment described above, the configuration is such that the hands 512, 513, and 514 are once returned to their initial positions when the time of the analog quartz clock 50 is adjusted, but the present invention is not limited to this configuration alone. Specifically, when the time is adjusted, the current positions of the hands 512, 513, and 514 should be determined in the present invention. Thus, a sensor may be provided for detecting the rotating positions of the fourth wheel 507, the second wheel 509, and the scoop wheel 511 on which the hands 512, 513, and 514 are mounted. In such case, the current positions of the hands 512, 513, and 514 are determined based on a detection signal from the sensor 39. For example, an optical sensor, a magnetic sensor, a sensor operating on the principle of electrostatic capacity, or another such non-contact sensor is preferably used as the sensor 39. Also, either a transmissive sensor or a reflective sensor can be used, but it is possible to make the casing 1 thinner by using a reflective sensor.
(2) The above embodiment was described with reference to a configuration in which the user operates the operating keys 8 to adjust the time in the analog quartz clock 50 and the clock 10 displayed on the display 4, but for example, it is also possible to provide wave clock functions whereby standard radio waves (radio waves indicating Japan Standard Time) transmitted by the Japan Standard Time Group of the Communications Research Laboratory are received and the time is adjusted automatically as long as the time of the analog quartz clock 50 is adjusted in coordination with the conventional adjusting method of time on the clock 10 in the portable phone 100.
(3) In the embodiment described above, a portable phone was described as an example of a portable information device. However, in addition to the portable phone, possible examples of the portable information device include a portable information device known as a PDA, a portable personal computer, a digital still camera, a digital video camera, a liquid crystal TV, a pager, an electronic notebook, a calculator, and the like. Also, in the case of a portable information device in which the casing does not have a flip configuration, but a sliding cover is provided to the casing and the main display is exposed by sliding the cover, the above-mentioned analog quartz clock may be provided to the sliding cover.
(4) In the embodiment described above, the configuration was such that the clock 10 displayed on the display 4 and the analog quartz clock 50 were both adjusted simultaneously, but the present invention need not be limited to this option alone. Specifically, the configuration may be such that either the time of the clock 10 or the analog quartz clock 50 is adjusted. More specifically, the configuration may be such that the user can select between the clock 10 and the analog quartz clock 50 to adjust the time by using the operating keys 8. During time adjustment, selection of the clock 10 by the user causes the drive control circuit 32 to output a signal solely to the liquid crystal display drive circuit 33, and selection of the analog quartz clock 50 causes the drive control circuit 32 to output a clock signal to the second motor drive circuit 34 and the minute/hour motor drive circuit 35. Thus, only the time of the objective clock is adjusted when the time of only one clock deviates or when the user intentionally desires for the time of one clock to deviate.

## Claims

1. A portable information device comprising a casing having opened and closed positions, and an internal display section that appears when said casing is opened, said internal display section being configured to display time, said portable information device **characterized by**
an index type analog clock provided in a portion of said casing which is an external portion when said casing is closed, and said analog clock displays time that is synchronized with the time displayed in said internal display section.

2. A portable information device comprising a casing having opened and closed positions, and an internal display section that appears when said casing is opened, said internal display section being configured to display time, said portable information device **characterized by**
an index type analog clock provided in a portion of said casing which is an external portion when said casing is closed, and the index of said analog clock is driven according to an output signal from a circuit that times the time displayed in said internal display section.

3. The portable information device as recited in claim 1 or 2, **characterized by** a baseboard of said analog clock is electrically connected to a baseboard of said portable information device.

4. The portable information device as recited in claim 1 or 2, **characterized by**
an adjusting means provided to adjust each of the time displayed in said internal display section and the time displayed by said analog clock independently or in an interdependent manner.

5. The portable information device as recited in claim 4, **characterized by**
said adjusting means adjusts the time displayed by said analog clock when the time displayed in said internal display section is adjusted.

6. The portable information device as recited in claim 4, **characterized by**
an operation section provided so that a user can operate said portable information device, and said adjusting means adjusts the time displayed in said internal display section in response to operation of the operation section.

7. The portable information device as recited in claim 4, **characterized by**
said adjusting means drives said index of said analog clock such that said index of said analog clock is moved to an initial position before said index of said analog clock is moved to display an adjusted time.

8. The portable information device as recited in claim 7, **characterized by**
a means to correct a displacement between said index and said initial position provided to correct said displacement when said index is displaced from said initial position after said index is driven by said adjusting means.

9. The portable information device as recited in claim 4, **characterized by**
a driving means provided to drive the index of said analog clock according to an output signal from a circuit that times the time displayed in said internal display section, and said adjusting means includes a detecting means to detect a current position of said index and a drive control means to control said driving means to drive said index from said initial position based on a detection result of said detecting means such that the index displays adjusted time.

10. The portable information device as recited in claim 9, **characterized by**
said driving means is provided for each of pointers of said index.

11. The portable information device as recited in claim 9, **characterized by**
said index includes at least a minute pointer, and said minute pointer has a driving means that is independent of the driving means that drives the other pointers of said index.
